# EUROPEAN PATENT SPECIFICATION

(11) **EP 0 433 037 B1**
(45) Date of publication and mention of the grant of the patent: **01.02.1995**
(21) Application number: 90313495.5
(22) Date of filing: 12.12.1990
(51) Int. Cl.: H02K 1/27, H02K 21/22, H02K 29/00

(54) **Spindle motor and disk drive provided therewith**
Spindelmotor und damit ausgestatteter Diskantrieb
Moteur axe et unité de disque pourvue de celui-ci

(30) Priority: 15.12.1989 US 452625
(43) Date of publication of application: 19.06.1991
(73) Proprietor: SEAGATE TECHNOLOGY INTERNATIONAL, Georgetown, Grand Cayman Island (KY)
(72) Inventor: Korbel, Garry E., New Prague, Minnesota 56071 (US)
(74) Representative: Sturt, Clifford Mark

(56) References cited:
- EP-A- 0 339 765
- DE-A- 2 840 057
- DE-U- 8 807 058
- PATENT ABSTRACTS OF JAPAN vol. 7, no. 58 (E-163)(1203) 10 March 1983 ; & JP-A-57 206 267
- PATENT ABSTRACTS OF JAPAN vol. 10, no. 279 (E-439)(2335) 20 September 1986 ; & JP-A-61 098 143
- PATENT ABSTRACTS OF JAPAN vol. 10, no. 347 (E-457)(2403) 21 November 1986 ; & JP-A-61 147 761

## Description

This invention relates to spindle motors, for example, used to rotate controllably disks in the course of storing data on the disks or retrieving previously stored data from the disks.

Disk drives, in which one or more disks are supported to rotate on a spindle, are frequently employed in connection with storing magnetic data. Typically a magnetic transducing head is movable radially of the disk which, in combination with disk rotation, permits selective positioning of the transducing head with respect to the recording surface of the disk. Similarly in connection with optical recording, a laser beam is movable generally radially of a rotating disk for writing information onto the disk, or for reading previously written information. In either case, satisfactory operation of the disk drive depends upon rapidly and smoothly accelerating the hub and disks to a desired rotational speed, maintaining the desired speed, then decelerating when it is desired to stop the disks. To this end, the spindle motor should have a high starting torque, and further should have minimal variance in torque from one angular location to another, i.e. a minimum torque ripple. EP-A- 339765 discloses a disk-drive spindle motor of the known type.

It is known that torque ripple effects can be reduced by introducing either radial or longitudinal asymmetry into the magnet of the spindle motor. For example, small magnets may be mechanically coupled or bonded to primary magnets with opposite poles of the respective magnets adjacent one another. Material can be cut away or otherwise removed from an originally symmetrical magnet to produce selective asymmetrical features. JP-A-61-98143, JP-A-61-147761 and JP-A-57-206267 disclose torque ripple reducing techniques:
in JP-A-6198143 recesses are formed on the magnet: the air-gaps thus created cause magnetic permeance and thus torque ripple to decrease.
In JP-A-61147761 cutouts are formed in arcuate shape on the magnets.
In JP-A-57206267, the magnets present a non-magnetized central region, or magnetized in reverse polarity to that of the pole. Yet another approach is to use non-functioning magnetic material to shunt magnetic flux away from the coils of the spindle motor stator. The current provided through various coils in the stator or rotor may be intermittently switched or otherwise varied, introducing fluctuations in the magnetic field intended to counteract torque ripple. These approaches, however, reduce the efficiency of the magnet and/or stator and thus degrade performance of the spindle motor. Further, they add to the expense of the motor in terms of added materials or cost of assembly.

The present invention seeks to provide a spindle motor in which torque ripple is reduced without requiring either radial or longitudinal asymmetry in either the rotor or stator. Moreover, the present invention seeks to provide a spindle motor in which an annular magnet is selectively magnetised to provide a magnetic flux pattern across an air gap between the magnet and stator, particularly suited to reduction of torque ripple.

According to one aspect of the present invention there is provided a spindle motor including an annular longitudinally disposed stator integral with and concentric with a spindle shaft, and a rotor assembly including a longitudinally disposed annular magnet spaced apart from the stator to define an annular gap said magnet being longitudinally and radially symmetrical and including a plurality of arcuate and longitudinally disposed poles substantially identical to one another in size and shape, characterised in that adjacent ones of the poles are physically separated from one another by longitudinal and radial flux gaps running the length of the magnet, each of the poles having a longitudinal medial region and first and second longitudinal end regions on opposite sides of the medial region, each of the poles further being selectively magnetised to provide a first magnetic flux level from the medial region across said annular gap, and a second flux level, greater than the first level and having the same polarity as the first level, from each of the end regions across the annular gap.

Preferably the stator is longitudinally and radially symmetrical.

Said rotor assembly, in one embodiment, includes an annular back iron having a radially inward surface contiguous with a radially outward surface of the magnet, said back iron being longitudinally and radially symmetrical.

Said medial region of each pole may be magnetised to a selected level less than saturation, and said first and second end regions are magnetised to saturation.

The magnet may include four of said poles.

According to another aspect of the present invention there is provided a disk drive including a stationary frame, an elongate spindle shaft fixed with respect to the frame, extending in a longitudinal direction and centered on a longitudinal spindle axis, a hub, at least one disk fixed with respect to the hub, and means for mounting the hub to rotate relative to the spindle shaft and about the spindle axis characterised by a spindle motor as claimed in any preceding claim, the hub being integral with the rotor assembly.

The back iron may be secured between the magnet and the hub.

Preferably the end regions of each pole are magnetised to 75 % to 95 % saturation or, preferably, about 85% saturation. This results in a magnetic flux pattern, associated with each pole, in which the peak flux is no longer at the centre of the pole. Rather, the centre is characterised by a slight dip in flux, between substantially equal peaks on opposite sides of the centre. The result of this pattern is a torque ripple that is substantially reduced in terms of peak to peak amplitude.

A salient feature of the present invention is that torque ripple may be reduced without requiring either a longitudinal or radial asymmetry in the stator or rotor assembly. Accordingly, the stator, magnet and back iron can be symmetrical, annular members reducing the cost of their manufacture. The stator can be fabricated without non-productive areas within its volume, thereby enhancing spindle motor efficiency. Thus, in a preferred embodiment of the present invention, the magnet, back iron and spindle shaft are annular and symmetrical, radially and longitudinally. Finally, torque ripple may be reduced without complex coil switching.

The invention is illustrated, merely by way of example, in the accompanying drawings, in which:-
Figure 1 is a partial sectional view of a disk drive having a spindle motor according to the present invention;
Figure 2 is a top view of a stator of the spindle motor of Figure 1;
Figure 3 is a top view of a magnet of the spindle motor of Figure 1;
Figure 4 is a perspective view of one of the poles of the magnet shown in Figure 3;
Figure 5 is a plot of the gap flux, torque profile and resultant torque of a conventional spindle motor; and
Figure 6 is a plot of the gap flux, torque profile and resultant torque of the spindle motor of Figure 1.

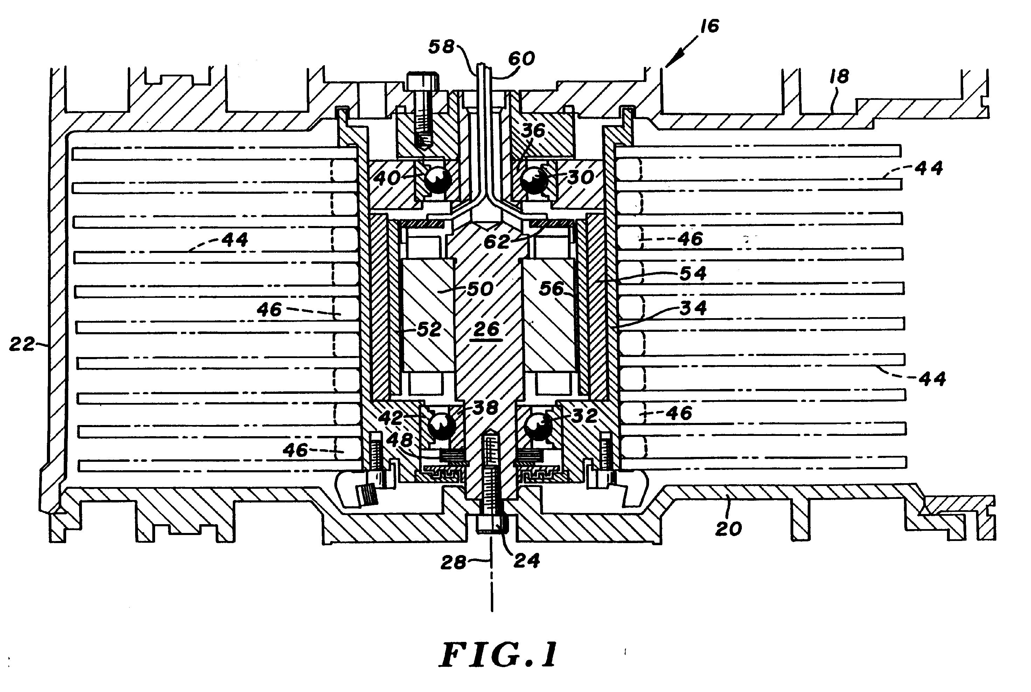

Turning now to the drawings, there is shown in Figure 1 a portion of a magnetic disk drive 16. The drive includes a stationary and rigid frame including a top cover 18, a bottom cover 20 and a side wall 22, constructed for example of aluminium. A fastener 24 secures an elongate spindle shaft 26 to the bottom cover 20. The spindle shaft 26 is disposed longitudinally, or vertically as viewed in Figure 1. The spindle shaft 26 is concentric with a vertical spindle axis 28.

An upper ball bearing 30 and a lower ball bearing 32 are provided for mounting an annular hub 34 to rotate relative to the spindle shaft 26, about the spindle axis 28. More particularly, inner races 36, 38 of the bearings 30, 32, respectively, are integral with the spindle shaft 26, while respective outer races 40, 42 are integral with the hub 34. The hub 34 supports a plurality of horizontally disposed magnetic recording disks 44, separated from one another by a plurality of annular spacers 46. The disks are integral with the hub 34, and thus rotate when the hub rotates. Springs 48 surround the spindle shaft 26 and provide a selected pre-load onto the bearings 30, 32.

A spindle motor is provided for rotating the disks 44 and the hub 34 relative to the spindle shaft. The motor includes a stator 50 integrally secured to the spindle shaft 26, and a rotor assembly including an annular magnet 52 and an annular back iron 54, both integrally secured to the hub. The stator 50 and the magnet 52 are spaced apart from one another to define a pre-determined annular air gap 56. Current to drive the spindle motor is provided through lead wires 58, 60 to a printed circuit board 62 integral with the stator 50, and then to the stator.

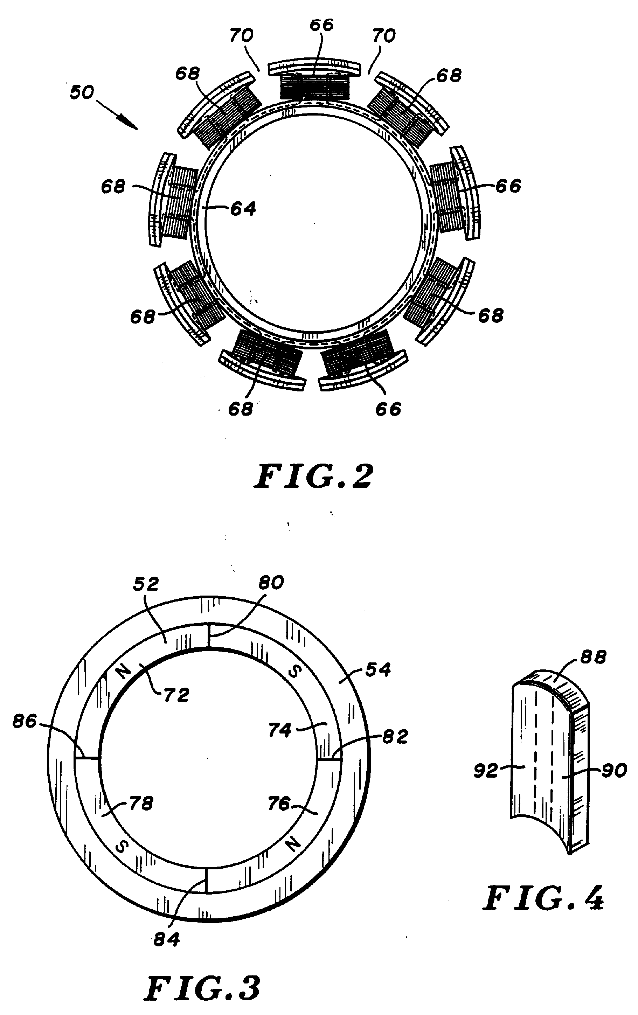

As seen in Figure 2, the stator 50 includes an annular core 64 having nine radially outward projections 66 equally spaced apart from one another. A version in which the core has twelve such projections has been found particularly suitable. A coil winding 68 is formed about each of the projections 66, with gaps 70 provided between adjacent projections and windings. The projections are substantially identical in size and shape, and equally spaced apart angularly from one another, to provide a stator which is symmetrical in the longitudinal and radial directions.

The magnet 52 is shown in greater detail in Figure 3. The magnet includes four arcuate poles 72, 74, 76, 78, substantially identical in size and shape, in an alternating N-pole and S-pole configuration. Between the poles are radially and longitudinally directed flux gaps 80, 82, 84, 86. The back iron 54 is annular, constructed of low carbon steel, and has its radially inward surface contiguous with the radially outward surface of the magnet 52. Like the stator, the magnet 52 and the back iron 54 are symmetrical radially and longitudinally.

In certain respects the magnet 52 is formed in a conventional manner. A magnetisable powder is pressed and heated to form the desired arcuate pole, and a coil is wound around the magnet and conducts electrical current sufficiently high to magnetise the pole towards saturation. However, in accordance with the present invention, each pole is not magnetised throughout to saturation. Rather, each of the poles 72, 74, 76, 78 is selectively magnetised to provide a medial region magnetised to a level less than saturation.

As seen in Figure 4, the pole 72 is selectively magnetised to provide three longitudinally extending regions of different magnetisation: a medial region 88 and end regions 90, 92 are on opposite sides of the medial region. More particularly, the end regions 90, 92 are magnetised to full saturation, while the medial region 88 is magnetised to a level less than saturation, for example in the range of 75% to 95% or more preferably to within the range of 85% to 90% saturation. One such magnet of this type is available from International Magnaproducts, Inc. of Valparaiso, Indiana, United States of America.

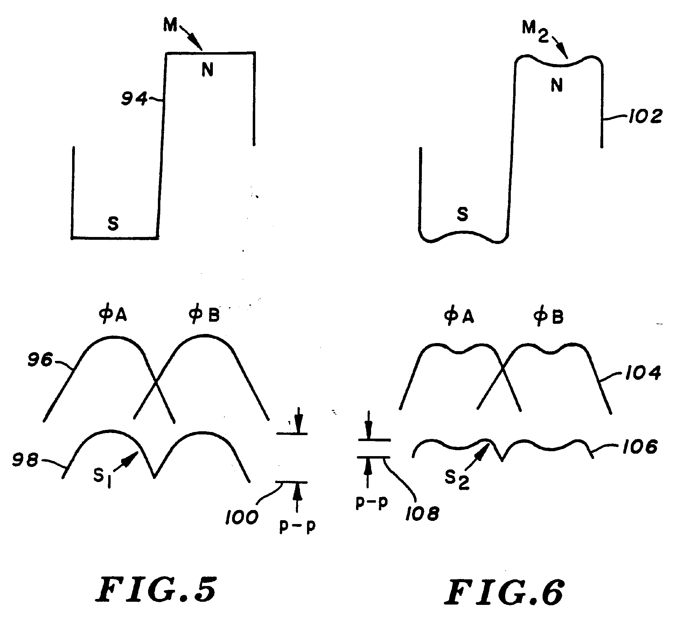

The advantage of employing the magnet 52 in the spindle motor can be appreciated from consideration of Figures 5 and 6. Figure 5 illustrates a gap flux 94, torque profile 96 and resultant torque 98 for an annular spindle motor magnet magnetised conventionally i.e. at or nearly at 100% saturation throughout the magnet body. The torque profile exhibits peaks corresponding to the centre of the medial region of each pole. While only two adjacent poles are plotted, it is to be appreciated that further adjacent poles would repeat the pattern illustrated. The resultant torque involves a substantial peak-to-peak gap indicated at 100.

In contrast, Figure 6 illustrates a gap flux 102 corresponding to the magnet 52, in which there is a slight reduction at the medial region of each pole, in each case to about 85% to 90% of the flux level at the end regions on opposite sides of the medial region. There is a corresponding reduction in the torque profile 104 and resultant torque 106 which, as seen at 108, results in a reduction in peak-to-peak amplitude, for substantially reduced torque ripple.

Thus, in accordance with the present invention, torque ripple is minimised without the added cost of asymmetrical magnets or stators, and further without any complex scheme of current switching among stators or rotor coils. Thus the cost of assembling the spindle motor is reduced while its efficiency is enhanced.

## Claims

1. A spindle motor including an annular longitudinally disposed stator (50) integral with and concentric with a spindle shaft (26), and a rotor assembly (52, 54, 56) including a longitudinally disposed annular magnet (52) spaced apart from the stator to define an annular gap (56), said magnet (52) being longitudinally and radially symmetrical and including a plurality of arcuate and longitudinally disposed poles (72, 74, 76, 78) substantially identical to one another in size and shape, characterized in that adjacent ones of said poles are physically separated from one another by longitudinal and radial flux gaps (80,82,84,86) running the length of the magnet, each of the poles having a longitudinally extending medial region (88) and first and second longitudinally extending end regions (90,92) on opposite sides of the medial region, each of the medial and end regions spanning the length of the annular gap (56), each of the poles further being selectively magnetised to provide a first magnetic flux level from the medial region (88) across said annular gap (56), and a second flux level, greater than the first level, and having the same polarity as the first level from each of the end regions (90,92) across the annular gap.

2. A spindle motor as claimed in claim 1 characterised in that said stator (50) is longitudinally and radially symmetrical.

3. A spindle motor as claimed in claim 2 characterised in that said rotor assembly further includes an annular back iron (54) having a radially inward surface contiguous with a radially outward surface of the magnet (52), said back iron (54) being longitudinally and radially symmetrical.

4. A spindle motor as claimed in any preceding claim characterised in that said medial region (88) of each pole (72, 74, 76, 78) is magnetised to a selected level less than saturation, and said first and second end regions (90,92) are magnetised to saturation.

5. A spindle motor as claimed in any preceding claim characterised in that said magnet (52) includes four of said poles (72, 74, 76, 78).

6. A spindle motor as claimed in claim 4, characterised in that the selected level of magnetisation of the medial region (88) is in the range 75% to 95% saturation.

7. A spindle motor as claimed in claim 4, characterised in that the selected level of magnetisation of the medial region (88) is in the range 85% to 90% saturation.

8. A disk drive including a stationary frame (18,20,22), an elongate spindle shaft (26) fixed with respect to the frame, extending in a longitudinal direction and centered on a longitudinal spindle axis (28), a hub (34), at least one disk (44) fixed with respect to the hub, and means (30, 32, 34, 36, 38, 40, 42) for mounting the hub (34) to rotate relative to the spindle shaft and about the spindle axis characterised by a spindle motor as claimed in any preceding claim, the hub (34) being integral with the rotor assembly (52,54,56).

9. A disk drive as claimed in claim 8 when dependent on claim 3 characterised in that the back iron (54) is secured between the magnet (52) and the hub (34).

## Patentansprüche

1. Spindelmotor mit einem kreisringförmigen, in Längsrichtung angeordneten Stator (50), der einstückig mit und konzentrisch zu einer Spindelwelle (26) ist, und mit einer Rotor-Baugruppe (52, 54, 56), die einen in Längsrichtung angeordneten kreisringförmigen Magneten (52) einschließt, der mit Abstand von dem Stator angeordnet ist, um einen kreisringförmigen Luftspalt (56) zu bilden, wobei der Magnet (52) in Längsrichtung und in Radialrichtung symmetrisch ist und eine Vielzahl von bogenförmigen und in Längsrichtung angeordneten Polen (72, 74, 76, 78) einschließt, die hinsichtlich ihrer Größe und Form im wesentlichen identisch zueinander sind,
dadurch gekennzeichnet, daß benachbarte der Pole körperlich voneinander durch in Längsrichtung und in Radialrichtung verlaufende Magnetflußspalte (80, 82, 84, 86) getrennt sind, die entlang der Länge des Magneten verlaufen, daß jeder der Pole einen sich in Längsrichtung erstreckenden Mittelbereich (88) und erste und zweite sich in Längsrichtung erstreckende Endbereiche (90, 92) auf gegenüberliegenden Seiten des Mittelbereiches aufweist, daß jeder der mittleren und Endbereiche die Länge des kreisringförmigen Spaltes (56) überspannt, daß jeder der Pole selektiv magnetisiert ist, um einen ersten Magnetflußpegel von dem Mittelbereich (88) längs des kreisringförmigen Luftspaltes (56) und einen zweiten Magnetflußpegel, der größer als der erste Pegel ist und die gleiche Polarität wie der erste Pegel aufweist, von jedem der Endbereiche (90, 92) längs des kreisringförmigen Luftspaltes zu schaffen.

2. Spindelmotor nach Anspruch 1,
dadurch gekennzeichnet, daß der Stator (50) in Längsrichtung und Radialrichtung symmetrisch ist.

3. Spindelmotor nach Anspruch 2,
dadurch gekennzeichnet, daß die Rotor-Baugruppe weiterhin ein kreisringförmiges Stützeisenteil (54) mit einer radial nach innen gerichteten Oberfläche einschließt, die an eine radial nach außen gerichtete Oberfläche des Magneten (52) angrenzt, und daß das Stützeisenteil (54) in Längsrichtung und in Radialrichtung symmetrisch ist.

4. Spindelmotor nach einem der vorhergehenden Ansprüche, dadurch gekennzeichnet, daß der Mittelbereich (88) jedes Pols (72, 74, 76, 78) auf einen ausgewählten Pegel kleiner als die Sättigung magnetisiert ist, und daß die ersten und zweiten Endbereiche (90, 92) bis zur Sättigung magnetisiert sind.

5. Spindelmotor nach einem der vorhergehenden Ansprüche, dadurch gekennzeichnet, daß der Magnet (52) vier der Pole (72, 74, 76, 78) einschließt.

6. Spindelmotor nach Anspruch 4,
dadurch gekennzeichnet, daß der ausgewählte Pegel der Magnetisierung des Mittelbereiches (88) im Bereich von 75 % bis 95 % der Sättigung liegt.

7. Spindelmotor nach Anspruch 4,
dadurch gekennzeichnet, daß der ausgewählte Pegel der Magnetisierung des Mittelbereiches (88) im Bereich von 85 % bis 90 % der Sättigung liegt.

8. Magnetplatten-Laufwerk mit einem stationären Rahmen (18, 20, 22), einer langgestreckten, bezüglich des Rahmens festgelegten Spindelwelle (26), die sich in einer Längsrichtung erstreckt und auf einer in Längsrichtung verlaufenden Spindelachse (28) zentriert ist, mit einer Nabe (34), mit zumindest einer bezüglich der Nabe festgelegten Platte (44) und mit Einrichtungen (30, 32, 34, 36, 38, 40, 42) zur Befestigung der Nabe 34 für eine Drehung gegenüber der Spindelwelle und um die Spindelachse,
gekennzeichnet durch einen Spindelmotor, wie er in einem der vorhergehenden Ansprüche beansprucht ist, wobei die Nabe (34) einstückig mit der Rotor-Baugruppe (52, 54, 56) ausgebildet ist.

9. Plattenlaufwerk nach Anspruch 8 unter Rückbeziehung auf Anspruch 3,
dadurch gekennzeichnet, daß das Stützeisenteil (54) zwischen dem Magneten (52) und der Nabe (34) befestigt ist.

## Revendications

1. Moteur d'axe comprenant un stator annulaire disposé longitudinalement (50) solidaire et concentrique par rapport à un axe d'entraînement (26), et un ensemble de rotor (52, 54, 56) comprenant un aimant annulaire disposé longitudinalement (52) écarté du stator pour définir un espace annulaire (56), ledit aimant (52) étant longitudinalement et radialement symétrique et comprenant une pluralité de pôles disposés longitudinalement et incurvés (72, 74, 76, 78) essentiellement identiques les uns aux autres en taille et en forme, caractérisé en ce que les pôles adjacents sont séparés physiquement les uns des autres par des entrefers à flux longitudinal et radial (80, 82, 84, 86) courant sur la longueur de l'aimant, chacun des pôles ayant une région intermédiaire s'étendant longitudinalement (88) et une première et deuxième régions d'extrémité (90, 92) s'étendant longitudinalement sur des côtés opposés de la région intermédiaire, chacune des régions d'extrémité et centrale recouvrant la longueur de l'espace annulaire (56), chacun des pôles étant de plus magnétisé sélectivement pour produire un premier niveau de flux magnétique à partir de la région intermédiaire (88) au-dessus dudit espace annulaire (56), et un deuxième niveau de flux, supérieur au premier niveau, et ayant la même polarité que le premier niveau, à partir des régions d'extrémité (90, 92) au-dessus de l'espace annulaire.

2. Moteur d'axe selon la revendication 1, caractérisé en ce que ledit stator (50) est longitudinalement et radialement symétrique.

3. Moteur d'axe selon la revendication 2, caractérisé en ce que ledit ensemble de rotor comprend, de plus, un contre-fer annulaire (54) ayant une surface intérieure radialement contiguë à une surface radialement extérieure de l'aimant (52), ledit contre-fer (54) étant longitudinalement et radialement symétrique.

4. Moteur d'axe selon l'une quelconque des revendications précédentes, caractérisé en ce que ladite région intermédiaire (88) de chaque pôle (72, 74, 76, 78) est magnétisée à un niveau sélectionné inférieur à la saturation, et en ce que lesdites première et deuxième régions d'extrémité (90, 92) sont magnétisées à saturation.

5. Moteur d'axe selon l'une quelconque des revendications précédentes, caractérisé en ce que ledit aimant (52) comprend quatre desdits pôles (72, 74, 76, 78).

6. Moteur d'axe selon la revendication 4, caractérisé en ce que le niveau de magnétisation sélectionné de la région intermédiaire (88) se trouve dans la gamme de saturation 75 à 95 %.

7. Moteur d'axe selon la revendication 4, caractérisé en ce que le niveau de magnétisation sélectionné de la région intermédiaire (88) se trouve dans la gamme de saturation 85 à 90 %.

8. Unité de disques comprenant un châssis fixe (18, 20, 22), un axe d'entraînement (26) fixe par rapport au châssis, s'étendant dans un sens longitudinal et centré sur un axe géométrique d'entraînement longitudinal (28), un moyeu (34), au moins un disque (44) fixe par rapport au moyeu, et des moyens (30, 32, 34, 36, 38, 40, 42) de montage du moyeu (34) pour le faire tourner relativement à l'axe d'entraînement et sur l'axe géométrique d'entraînement, caractérisée par un moteur d'axe selon l'une quelconque des revendications précédentes, le moyeu (34) étant solidaire de l'ensemble de rotor (52, 54, 56).

9. Unité de disques selon la revendication 8, dépendante de la revendication 3, caractérisée en ce que le contre-fer (54) est fixé entre l'aimant (52) et le moyeu (34).
